# EUROPEAN PATENT APPLICATION

(11) **EP 4 246 625 A1**
(43) Date of publication of application: **20.09.2023**
(21) Application number: 23161512.1
(22) Date of filing: 13.03.2023
(51) Int. Cl.: H01M 4/36, H01M 10/0587, H01M 4/02

(54) **ELECTROCHEMICAL APPARATUS AND ELECTRONIC APPARATUS**

(30) Priority: 16.03.2022 CN 202210261722
(71) Applicant: Ningde Amperex Technology Limited, Zhangwan Town, Jiaocheng District Ningde City Fujian 352100 (CN)
(72) Inventor: GUAN, Ting, Ningde City Fujian 352100 (CN); WU, Ruitao, Ningde City Fujian 352100 (CN); ZHU, Shan, Ningde City Fujian 352100 (CN); WU, Fei, Ningde City Fujian 352100 (CN)
(74) Representative: Icosa

(57) **Abstract**

An electrochemical apparatus includes an electrode assembly, where the electrode assembly includes a positive electrode plate, a negative electrode plate, and a separator for separating the positive electrode plate and the negative electrode plate. The positive electrode plate includes a positive electrode current collector, a positive electrode active material layer, and a non-active material layer. The positive electrode active material layer is formed on a surface of the positive electrode current collector, and the non-active material layer is formed on a surface of the positive electrode active material layer away from the positive electrode current collector. In a first direction, the non-active material layer has a thickness of 1 µm to 20 µm, where the first direction is a thickness direction of the positive electrode current collector. In addition, a diffusion rate of lithium ions in the non-active material layer is less than that in the positive active material layer.

## Description

### TECHNICAL FIELD

This application relates to the field of energy storage technologies, and in particular, to an electrochemical apparatus and an electronic apparatus.

### BACKGROUND

During charge of an electrochemical apparatus, a positive electrode loses electrons, and lithium ions can deintercalate from a lattice of a positive electrode active material layer. Then, the lithium ions pass through a separator, migrate to a negative electrode, and then intercalate into pores of a negative electrode active material layer. Meanwhile, electrons also reach the negative electrode through an external circuit, and the obtained electrons and the intercalated lithium ions at the negative electrode are bonded to form a lithium-carbon interlayer compound. During discharge, the electrochemical apparatus has an opposing process.

At present, constantly improved kinetic performance of the electrochemical apparatuses leads to an increasing charge and discharge rate of the electrochemical apparatuses. During a high-rate charge and discharge cycling, lithium ions in an electrolyte are prone to nonuniform concentration, and uneven deposition of lithium metal occurs at different places. For an anode of an electrode assembly, undesirably fast deposition occurs in some regions of the surface of an anode electrode plate, thereby forming sharp lithium dendrites. The lithium dendrite is prone to piercing the separator to cause a short-circuit, which is not conducive to improving the charge and discharge rate of the electrochemical apparatus.

### SUMMARY

This application is intended to provide an electrochemical apparatus to alleviate lithium precipitation on electrode plates in the electrochemical apparatus.

This application provides an electrochemical apparatus including an electrode assembly, where the electrode assembly includes a positive electrode plate, a negative electrode plate, and a separator for separating the positive electrode plate and the negative electrode plate. The positive electrode plate includes a positive electrode current collector and a positive electrode active material layer, and a non-active material layer. The positive electrode active material layer is formed on a surface of the positive electrode current collector, and the non-active material layer is formed on a surface of the positive electrode active material layer away from the positive electrode current collector. In a first direction, the non-active material layer has a thickness of 1 µm to 20 µm, where the first direction is a thickness direction of the positive electrode current collector. In addition, a diffusion rate of lithium ions in the non-active material layer is less than that in the positive active material layer. Such settings provide the following advantages: the diffusion rate of the lithium ions in the positive electrode active material layer region facing to the non-active material layer can be reduced to decrease current density of the region during charge of the electrochemical apparatus, thereby optimizing uniformity of lithium intercalation on the negative electrode plate facing to the non-active material layer such that charge and discharge rate of the electrochemical apparatus is improved.

In some optional embodiments, the positive electrode plate has a first part, a second part, and a third part, and in a second direction, the first part is connected to one end of the second part, and the third part is connected to another end of the second part. The second direction is perpendicular to the first direction, and the second direction is a width direction of the positive electrode current collector. The non-active material layer includes a first non-active material layer, where the first non-active material layer is disposed on the first part and/or the third part. This slows down deintercalation rate of the lithium ions in the positive electrode active material layers of the first part and the third part, thereby reducing regional lithium precipitation on the negative electrode plate facing to the first part and the third part.

In some optional embodiments, in the second direction, a ratio of the width of the first non-active material layer to the width of the positive electrode current collector is 0.01% to 30%, which facilitates saving coating costs.

In some optional embodiments, the positive electrode plate, the separator, and the negative electrode plate are sequentially stacked and wound to form the electrode assembly. The positive electrode plate includes a first blank region, a first two-sided region, a first single-sided region, and a second blank region. In a winding direction, the first two-sided region has a winding starting end and a winding terminating end, the winding starting end being closer to the winding center than the the winding terminating end. The first blank region is connected to the winding starting end. A first end of the first single-sided region is connected to the winding terminating end. The second blank region is connected to a second end of the first single-sided region, the second end of the first single-sided region being opposite from the first end of the first single-sided region. The non-active material layer includes a second non-active material layer, where the second non-active material layer is disposed on at least one of the winding starting end, the winding terminating end, or the second end of the first single-sided region, so as to slow down the deintercalation rate of the lithium ions in the positive electrode active material layer facing to the second non-active material layer, thereby reducing regional lithium precipitation on the negative electrode plate facing to the second non-active material layer. Two-sided region is the active material layers is separately coated on both surfaces of the current collector, and the single-side is the active material layer is coated on only one surface of the current collector.

In some optional embodiments, in the third direction, the second non-active material layer has a width of 1 µm to 30 µm. The third direction, the second direction, and the first direction are perpendicular to each other. The width of the second non-active material layer being restricted within such range provides a good effect of slowing down the deintercalation rate of the lithium ions and facilitates saving coating costs.

In some optional embodiments, the negative electrode plate has a second single-sided region. The non-active material layer includes a third non-active material layer. The third non-active material layer is disposed on the first two-sided region of the positive electrode plate facing to the second single-sided region, so as to slow down the deintercalation rate of the lithium ions in the positive electrode active material layer facing to the third non-active material layer, thereby reducing regional lithium precipitation on the negative electrode plate facing to the third non-active material layer.

In some optional embodiments, the positive electrode plate is provided with a first groove, and the positive electrode current collector is exposed at the bottom of the first groove. The electrochemical apparatus includes a positive electrode tab and a first bonding piece. A part of the positive electrode tab is accommodated in the first groove and is connected to the positive electrode current collector. The first bonding piece is fastened to the positive electrode plate and covers the first groove. The non-active material layer includes a fourth non-active material layer. The fourth non-active material layer is disposed around a periphery of the first bonding piece.

In some optional embodiments, the electrochemical apparatus further includes a negative electrode tab and a second bonding piece. A part of the negative electrode tab is connected to the negative electrode current collector. The positive electrode plate is further provided with a second groove facing to the negative electrode tab. The positive electrode current collector is exposed at the bottom of the second groove, and the second bonding piece is fastened to the positive electrode plate and covers the second groove. The non-active material layer includes a fifth non-active material layer. The fifth non-active material layer is disposed around a periphery of the second bonding piece.

The positive electrode plate is provided with a groove, and the positive electrode current collector is exposed at the bottom of the groove. One end of the positive electrode tab is accommodated in the groove and is connected to the positive electrode current collector. The electrochemical apparatus further includes a bonding piece. The bonding piece is fastened to the positive electrode plate and covers the groove. The non-active material layer further includes a fifth non-active material layer. The fifth non-active material layer is disposed around the periphery of the bonding piece.

In some optional embodiments, the electrode assembly includes a first straight section, a first bending section, a second straight section, and a second bending section that are sequentially connected in the winding direction. The first straight section is opposite the second straight section and the first bending section is opposite the second bending section. The non-active material layer further includes a sixth non-active material layer. The sixth non-active material layer is disposed on the first bending section and/or the second bending section.

Another technical solution used in this application is to provide an electronic apparatus, including the foregoing electrochemical apparatus.

This application has the following beneficial effect: with the non-active material layer being formed on the surface of the positive electrode active material layer, that is, the non-active material layer is formed on the surface of the positive electrode active material layer, and a diffusion rate of lithium ions in the non-active material layer is less than that in the positive active material layer, the deintercalation rate of lithium ions in the positive electrode active material layer can be slowed down. In other words, some of lithium compounds in the positive electrode active material layer facing to the non-active material layer fail to form lithium ions, and thus during the same time, the total amount of lithium intercalating in the negative electrode active material layer facing to the non-active material layer decreases, alleviating the case that the deposition in the negative electrode active material layer region facing to the non-active material layer is undesirably fast, thereby relieving lithium precipitation in the electrochemical apparatus.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a mobile phone according to an embodiment of this application;
FIG. 2 is a schematic structural diagram of an electrode assembly in the electrochemical apparatus shown in FIG. 1 when being wound but uncoated with a non-active material layer;
FIG. 3 is a local schematic diagram of a first two-sided region or a first single-sided region of an unwounded positive electrode plate in the electrode assembly shown in FIG. 2;
FIG. 4 is a cross-sectional view of the positive electrode plate, shown in FIG. 3, in a first direction;
FIG. 5 is another cross-sectional view of the positive electrode plate shown in FIG. 3 in a first direction;
FIG. 6 is a local schematic diagram of a winding starting end of a first two-sided region of a positive electrode plate in the electrode assembly shown in FIG. 2;
FIG. 7 is a cross-sectional view of the winding starting end of the first two-sided region shown in FIG. 6 in a first direction;
FIG. 8 is another cross-sectional view of the winding starting end of the first two-sided region shown in FIG. 6 in a third direction;
FIG. 9 is a local schematic diagram of the first two-sided region of the positive electrode plate in the electrode assembly shown in FIG. 2 and a second single-sided region of a negative electrode plate facing to the first two-sided region of the positive electrode plate; and
FIG. 10 is a schematic structural diagram of the positive electrode plate in the electrode assembly shown in FIG. 2, with a first groove and a second groove provided.

### DETAILED DESCRIPTION

The following clearly and completely describes the technical solution in the embodiments of this application with reference to the accompanying drawings in the embodiments of this application. Apparently, the described embodiments are only some rather than all of the embodiments of this application. The following description of at least one example embodiment is merely illustrative and definitely is not construed as any limitation on this application or on use of this application. All other embodiments obtained by a person of ordinary skill in the art based on the embodiments of this application without creative efforts shall fall within the protection scope of this application.

The technologies, methods, and devices known to those of ordinary skill in the related art may not be discussed in detail, but where appropriate, the technologies, methods, and devices should be regarded as being authorized as a part of the specification.

In the description of this application, it should be noted that, the orientations or positional relationships indicated by the orientation terms such as "front, rear, upper, lower, left, and right", "lateral, vertical, vertical, and horizontal", and "top and bottom" and the like are merely for ease and brevity of description of this application rather than indicating or implying that the apparatuses or components mentioned must have specific orientations or must be constructed or manipulated according to specific orientations in the case that the opposite description is not made. These terms shall therefore not be construed as limitations on this application. The orientation terms "inner and outer" refer to the inside and outside relative to the outline of each component itself.

In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

In the description of this application, it should be noted that the terms such as "first" and "second" should be used to define components, which are merely to facilitate distinguishing facing components, and if not stated otherwise, the above-mentioned words do not have a special meaning, and therefore cannot be understood as a limitation to the protection scope of this application.

The electrochemical apparatus according to this application is applicable to an electronic apparatuses of such electrochemical apparatus. In this way, local lithium precipitation in the existing electrochemical apparatuses can be alleviated to improve safety performance of the electrochemical apparatus. It can be understood that the electronic apparatus in the embodiments of this application is not specifically limited. The electronic apparatus may include but is not limited to a notebook computer, a peninput computer, a mobile computer, an electronic book player, a portable telephone, a portable fax machine, a portable copier, a portable printer, a stereo headset, a video recorder, a liquid crystal television, a portable cleaner, a portable CD player, a minidisc, a transceiver, an electronic notepad, a calculator, a memory card, a portable recorder, a radio, a standby power source, a motor, an electric vehicle, an automobile, a motorcycle, a power-assisted bicycle, a bicycle, a lighting appliance, a toy, a game console, a clock, an electric tool, a flash lamp, a camera, a large household battery, or a lithium-ion capacitor. However, for ease of description, the following embodiments are all described using a mobile phone as the electronic apparatus.

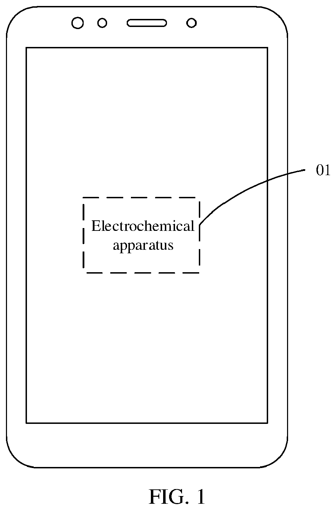

Refer to the example shown in FIG. 1. FIG. 1 is a schematic structural diagram of a mobile phone. The above electrochemical apparatus 01 is installed inside the mobile phone, and the electrochemical apparatus 01 supplies electric energy to or stores electric energy for the mobile phone, satisfying electricity requirements during use of the mobile phone. It can be understood that types of the electrochemical apparatus 01 according to the embodiments of this application actually vary. For example, the electrochemical apparatus 01 may include all kinds of primary batteries, secondary batteries, fuel batteries, solar batteries, or capacitors. Optionally, the electrochemical apparatus 01 is a secondary lithium battery, including a secondary lithium metal battery, a secondary lithium-ion battery, a secondary lithium polymer battery, or a secondary lithium-ion polymer battery. For ease of description, the following embodiments are all described using a secondary lithium-ion battery as the electrochemical apparatus 01.

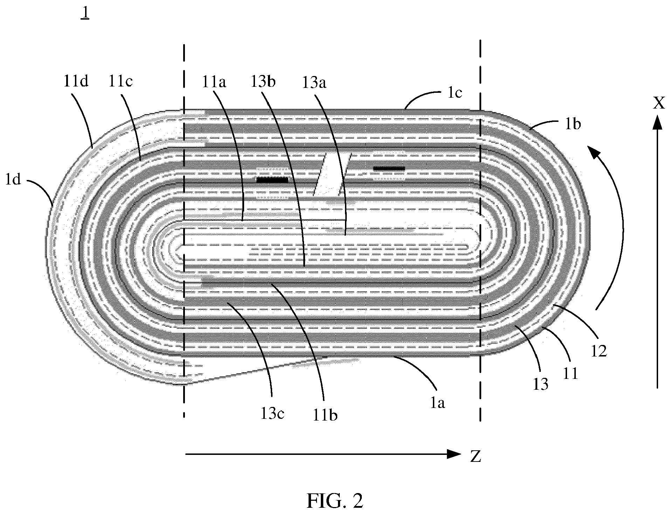

Refer to FIG. 2 together with reference to the example shown in FIG. 1. FIG. 2 is a schematic structural diagram of an electrode assembly 1 in the electrochemical apparatus 01 shown in FIG. 1. The electrochemical apparatus 01 includes a housing (not shown in the figure), an electrode assembly 1, and tabs (not shown). The housing is an installation support structure for the electrode assembly 1. The housing is provided with a cavity that is configured to accommodate the electrode assembly 1 so as to protect the electrode assembly 1. The electrode assembly 1 is a component for implementing charge and discharge functions in the electrochemical apparatus 01. The electrode assembly 1 is accommodated in the cavity and includes a positive electrode plate 11, a negative electrode plate 13, and a separator 12 for separating the positive electrode plate 11 and the negative electrode plate 13. The tab is connected to the electrode assembly 1, and the tab runs through the housing and is exposed outside the housing to form a connecting terminal, where the connecting terminal is configured to be in electrical communication with outside. The tab connected to the positive electrode plate 11 of the electrode assembly 1 is referred to as positive electrode tab. Correspondingly, the part of the positive electrode tab led out of the housing and configured to be electrically connected to outside is referred to as positive electrode terminal. The tab connected to the negative electrode plate 13 of the electrode assembly 1 is referred to as negative electrode tab. Correspondingly, the part of the negative electrode tab led out of the housing and configured to be electrically connected to the external environment is referred to as negative electrode terminal.

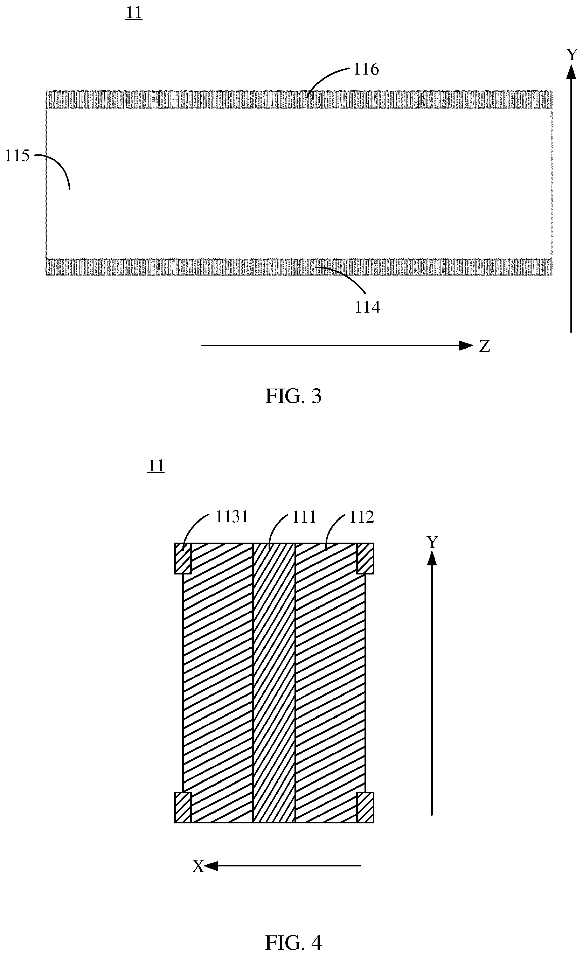

For the positive electrode plate 11, refer to the example shown in FIG. 3. FIG. 3 is a schematic structural diagram of an electrode assembly 1 according to an embodiment of this application. The positive electrode plate 11 includes a positive electrode current collector 111, a positive electrode active material layer 112, and a non-active material layer. The positive electrode active material layer 112 is formed on a surface of the positive electrode current collector 111, and the non-active material layer is formed on a surface of the positive electrode active material layer 112 away from the positive electrode current collector 111. Specifically, the positive electrode active material layer 112 may be formed on a surface of one side of the positive electrode current collector 111, or may be formed on two surfaces of opposite sides of the positive electrode current collector 111. With the positive electrode active material layer 112 being formed on the two surfaces of the opposite sides of the positive electrode current collector 111, the non-active material layer may be formed only on the surface of the positive electrode active material layer 112 on one side of the positive electrode current collector 111, or the non-active material layer may be formed on the surfaces of the positive electrode active material layers 112 on two opposite sides of the positive electrode current collector 111. This is not specifically limited in the embodiments of this application.

The positive electrode current collector 111 is a bearing structure for the positive electrode active material layer 112 and the non-active material layer, and is also a conductive structure for the positive electrode plate 11. The positive electrode current collector 111 may be connected to the positive electrode tab so as to output electrons to the outside or input the electrons from the outside. Specifically, the positive electrode current collector 111 is made of a metal material. The metal material may include at least one of Ni, Ti, Cu, Ag, Au, Pt, Fe, Co, Cr, W, Mo, Al, Mg, K, Na, Ca, Sr, Ba, Si, Ge, Sb, Pb, In, Zn, or a composition thereof (alloy). For example, the positive electrode current collector 111 may be made of a copper foil.

The positive electrode active material layer 112 is a layered structure formed by applying a slurry of positive electrode active materials on the surface of the positive electrode current collector 111. The layered structure features lithium ion conductivity and can still maintain its form without flowing even if the positive electrode active material comes in contact with the solid electrolyte. The positive electrode active material is a material capable of implementing electrode reaction through intercalation/deintercalation (intercalation/deintercalation) of lithium ions between layers.

Optionally, the positive electrode active material may be a lithium metal oxide such as LiNi₁/₃Mn₁/₃Co₁/₃O₂, LiCoO₂, LiNiO₂, LiMn₂O₄, LiCoMnO₄, and Li₂NiMn₃O₈. Alternatively, the positive electrode active material may be lithium metal phosphate such as LiFePO₄, LiMnPO₄, LiNiPO₄, LiCoPO₄, Li₃Fe₂(PO₄)₃, and Li₃V₂(PO₄)₃. It can be understood that in addition to the positive electrode active material, the material for constituting the positive electrode active material layer 112 may also be but is not limited to a conductive promoter, a sintering promoter, or a binder. The conductive promoter may be electrically conductive, for example, may be carbon black such as acetylene black, Ketjen black, carbon fiber, a carbon nanotube, carbon nanofiber, and graphene. The sintering promoter may be catalytic, for example, may be ceramic. The binder may be adhesive, for example, may be at least one of the polymeric materials such as polyvinylidene fluoride, a copolymer of vinylidene fluoridefluorinated olefin, polyvinylpyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol. Adding the above materials to the positive electrode active material can reduce a bonding force after the slurry is applied, so as to improve processability of the slurry.

The non-active material layer is a layered structure formed by applying a slurry of non-active materials on the surface of the positive electrode active material layer 112 away from the positive electrode current collector 111. The layered structure features lithium ion conductivity and can still maintain its form without flowing even if the non-active materials come in contact with the solid electrolyte. The non-active material is a solid electrolyte substantially including no positive electrode active material or negative electrode active material. The "substantially including no positive electrode active material or negative electrode active material" means that no positive electrode active material or negative electrode active material is included as long as no short-circuit occurs between the non-active material layer and the positive electrode active material layer 112. For example, the solid electrolyte may be an oxide solid electrolyte or a sulfide solid electrolyte. It can be understood that in addition to the solid electrolyte, the material for constituting the non-active material layer may also include but is not limited to a conductive promoter, a sintering promoter, or a binder. The conductive promoter, the sintering promoter, and the binder in the positive electrode active material layer 112 may be used as the conductive promoter, the sintering promoter, and the binder.

It should be noted that the difference between the positive electrode active material layer 112 and the non-active material layer that are disclosed in this application not only lies in materials. The difference also lies in a diffusion rate of lithium ions, where a diffusion rate of lithium ions in the non-active material layer is less than that in the positive electrode active material layer 112. The diffusion rate of lithium ions in the non-active material layer means a degree of ease of the lithium ions running through from the side of the non-active material layer closer to the positive electrode active material layer 112 to the side of the non-active material layer farther away from the positive electrode active material layer 112. The diffusion rate of lithium ions in the positive electrode active material layer 112 means a degree of ease of the lithium ions running through from the side of the positive electrode active material layer 112 closer to the positive electrode current collector 111 to the side of the positive electrode active material layer 112 farther away from the positive electrode current collector 111. This can be regarded as a contribution made by the solid electrolytes in the positive electrode active material layer 112 and the non-active material layer.

Specifically, a vertical distance between the surface of the non-active material layer farther away from the positive electrode active material layer 112 and the surface of the non-active material layer contacting with the positive electrode active material layer 112 is 1 µm to 20 µm. Such settings provide the following advantages: the diffusion rate of the lithium ions in the positive electrode active material layer 112 region facing to the non-active material layer can be reduced to decrease current density of the region during charge of the electrochemical apparatus 01, thereby optimizing uniformity of lithium intercalation on the negative electrode plate 13 facing to the non-active material layer such that charge and discharge rate of the electrochemical apparatus 01 is improved. This will be described in detail below with reference to lithium precipitation window test of the electrochemical apparatus 01.

Furthermore, a vertical distance between the surface of the non-active material layer farther away from the positive electrode active material layer 112 and the surface of the positive electrode active material layer 112 contacting with the positive electrode current collector 111 is equal to a vertical distance between the two opposite sides of the positive electrode active material layer 112 not facing to the non-active material layer. In this way, the current density of the region can be reduced during charge of the electrochemical apparatus 01, and a space occupied by the non-active material layer can also be optimized, facilitating improving energy density of the electrochemical apparatus 01. Certainly, the vertical distance between the surface of the non-active material layer farther away from the positive electrode active material layer 112 and the surface of the positive electrode active material layer 112 contacting with the positive electrode current collector 111 is greater than or equal to the vertical distance between the two opposite sides of the positive electrode active material layer 112 not facing to the non-active material layer 1131. This is not specifically limited in this application.

Optionally, a combined impedance of the positive electrode active material layer 112 and the non-active material layer is greater than an impedance of the positive electrode active material layer 112, so that the charge and discharge rate of the electrochemical apparatus 01 can be further improved.

For the above separator 12, the separator 12 is a microporous or porous film for isolating electrons and conducting ions and is able to maintain the electrolyte. The separator 12 is sandwiched between the positive electrode plate 11 and the negative electrode plate 13 and is not in contact with the positive electrode active material layer 112 and the negative electrode plate 13, so as to prevent the positive electrode plate 11 and the negative electrode plate 13 that are different in polarities from being in contact with each other and causing a short-circuit. Certainly, the separator 12 may also be in contact with at least a part of the positive electrode active material layer 112 and the negative electrode plate 13.

The separator 12 may include a substrate and a porous layer. The porous layer is formed on at least one surface of the substrate. The porous layer can improve heat resistance, oxidation resistance, and electrolyte infiltration performance of the substrate, and enhance bonding performance between the separator 12 and the positive electrode plate 11 or negative electrode plate 13.

The substrate may be a non-woven fabric, a film, or a composite film that has a porous structure. The substrate layer may include at least one of polyethylene, polypropylene, polyethylene terephthalate, or polyimide. For example, a polypropylene porous film, a polyethylene porous film, polypropylene non-woven fabric, polyethylene non-woven fabric, or a polypropylene-polyethylene-polypropylene porous composite film may be selected.

The porous layer may be a polymer layer or an inorganic substance layer, or may be a layer formed by mixing a polymer and an inorganic substance. The polymer layer includes at least one of polymers such as polyamide, polyacrylonitrile, acrylate polymer, polyacrylic acid, polyacrylate, polyvinylpyrrolidone, polyvinylidene fluoride, or poly(vinylidene fluoride-hexafluoropropylene). The inorganic substance layer includes inorganic particles and a binder, and the inorganic particles are selected from at least one of aluminum oxide, silicon oxide, magnesium oxide, titanium oxide, hafnium dioxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polymethyl methacrylate, polytetrafluoroethylene, or polyhexafluoropropylene.

For the above negative electrode plate 13, the negative electrode plate 13 includes a negative electrode current collector 131 and a negative electrode active material layer 132. The negative electrode active material layer 132 is formed on a surface of the negative electrode current collector 131. Specifically, the negative electrode active material layer 132 may be formed on a surface of one side of the negative electrode current collector 131, or may be formed on surfaces of two opposite sides of the negative electrode current collector 131. This is not specifically limited in the embodiments of this application.

The negative electrode current collector 131 not only functions as a bearing structure for the negative electrode active material layer 132, but also functions as a conductive structure for the negative electrode plate 13. The negative electrode current collector 131 may be connected to the negative electrode tab so as to output electrons to the outside or input the electrons from the outside. Specifically, the negative electrode current collector 131 is made of a metal material. This metal material may include at least one of Ni, Ti, Cu, Ag, Au, Pt, Fe, Co, Cr, W, Mo, Al, Mg, K, Na, Ca, Sr, Ba, Si, Ge, Sb, Pb, In, Zn, or a composition thereof (alloy). For example, the negative electrode current collector 131 can be made of aluminum foil.

The negative electrode active material layer 132 is a layered structure formed by applying a slurry of negative electrode active materials on the surface of the negative electrode current collector 131. The layered structure features lithium ion conductivity and can still maintain its form without flowing even if the negative electrode active materials comes in contact with the solid electrolyte. The negative electrode active material is a material that can release the lithium ions during discharge of the electrochemical apparatus 01 and can arbitrarily absorb the lithium ions during charge of the electrochemical apparatus 01. Optionally, the negative electrode active material may include carbon materials such as graphite and hard carbon, or Si, Si alloy and Li₄Ti₅O₁₂. It can be understood that in addition to the negative electrode active material, the material for constituting the negative electrode active material layer 132 may also include but is not limited to a conductive promoter, a sintering promoter, or a binder. The conductive promoter, the sintering promoter, and the binder may adopt the conductive promoter, the sintering promoter, and the binder in the positive electrode active material layer 112.

When the electrochemical apparatus 01 discharges, the positive electrode current collector 111 can collect the electrons generated when the positive electrode active material layer 112, the negative electrode active material layer 132, and the electrolyte of the electrochemical apparatus 01 together have electrochemical reactions, and conduct the electrons to the positive electrode terminal through the positive electrode tab. Likewise, the negative electrode current collector 131 can collect the electrons generated when the negative electrode active material layer 132, the positive electrode active material layer 112, and the electrolyte together have electrochemical reactions, and conduct the electrons to the negative electrode terminal through the negative electrode tab to output electric energy to the outside. However, during charge of the electrochemical apparatus 01, electrons have a contrary conduction path to convert the electric energy input from the outside into chemical energy. With the non-active material layer being formed on the surface of the positive electrode active material layer 112, that is, the non-active material layer is formed on the surface of the positive electrode active material layer, and a diffusion rate of lithium ions in the non-active material layer is less than that in the positive active material layer 112, the deintercalation rate of lithium ions in the positive electrode active material layer 112 can be slowed down. In other words, some of lithium compounds in the positive electrode active material layer 112 facing to the non-active material layer fail to form lithium ions, and thus during the same time, the total amount of lithium intercalating in the negative electrode active material layer 132 facing to the non-active material layer decreases, alleviating undesirably fast deposition in the negative electrode active material layer 132 region facing to the non-active material layer, thereby relieving lithium precipitation in the electrochemical apparatus 01.

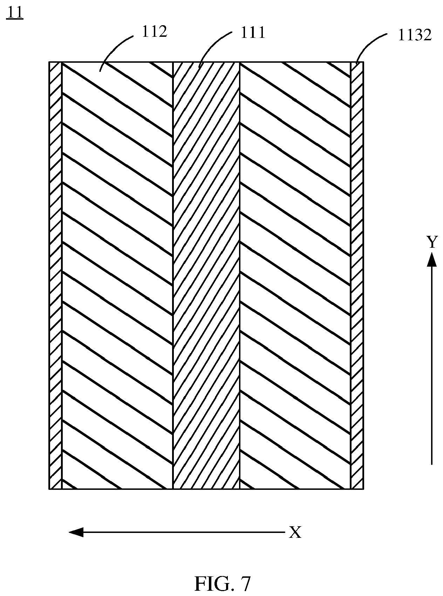

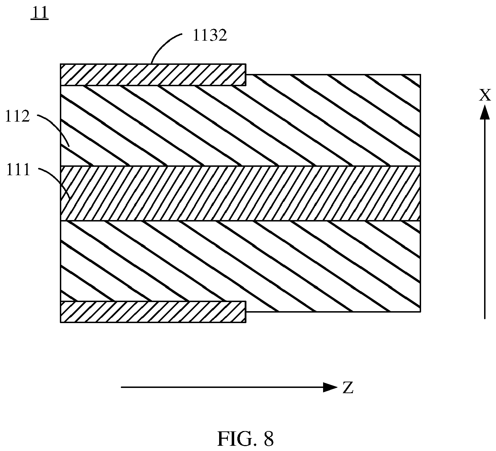

For clear description of each position, a coordinate system in FIG. 2 to FIG. 10 is used to define each orientation. As shown in FIG. 2, a coordinate axis X represents a thickness direction of the positive electrode current collector 111. In some embodiments of this application, this thickness direction may be a direction along which a first straight section 1a and a second straight section 1c of the electrode assembly 1 are disposed opposite each other. A coordinate axis Y represents a width direction of the positive electrode current collector 111. In some embodiments of this application, this width direction may be a direction toward which the positive electrode tab or the negative electrode tab extends. A coordinate axis Z represents a length direction of the positive electrode current collector 111. In some embodiments of this application, this length direction may be a direction along which a first bending section 1b and a second bending section 1d of the electrode assembly 1 are disposed opposite each other. The first direction, the second direction, and the third direction are perpendicular to each other.

Based on the orientation definitions, with reference to the embodiments in the descriptions of drawings, description of a specific structure of the electrode assembly 1 is made. The terms "upper", "lower", "top", "bottom" and the like used below represent the orientation or position relationship, which are all relative to the second direction Y. It should be noted that a wound electrode assembly is used as an example to describe the electrode assembly 1 disclosed in this application. That is, the positive electrode plate 11, the separator 12, and the negative electrode plate 13 are sequentially stacked and wound to form a flat winding structure. With respect to the stacked electrode assembly 1, the wound electrode assembly 1 is the same as the stacked electrode assembly 1 in some structures. Therefore, part of description below is also applicable to the stacked electrode assembly 1.

As shown in FIG. 2, the electrode assembly 1 may include the first straight section 1a, the first bending section 1b, the second straight section 1c, and the second bending section 1d. The first straight section 1a, the first bending section 1b, the second straight section 1c, and the second bending section 1d are sequentially distributed along the winding direction of the electrode assembly 1. The first straight section 1a is opposite the second straight section 1c, and the first bending section 1b is opposite the second bending section 1d. Two ends of the first bending section 1b are respectively connected to one end of the first straight section 1a and one end of the second straight section 1c, and two ends of the second bending section 1d are respectively connected to another end of the first straight section 1a and another end of the second straight section 1c. The first straight section 1a is a part between a position where the electrode assembly 1 is bent for the first time and a position where the electrode assembly 1 is not bent again. The second straight section 1c is a part between the position where the electrode assembly 1 is bent for the second time and a position where the electrode assembly 1 is not bent for the first time. The first bending section 1b is a part between the position where the electrode assembly 1 is bent for the first time and the position where the electrode assembly 1 is not bent for the first time. The second bending section 1d is a part between the position where the electrode assembly 1 is bent for the second time and the position where the electrode assembly 1 is not bent for the second time.

For the foregoing positive electrode plate 11, the positive electrode plate 11 may include a first blank region 11a, a first two-sided region 11b, a first single-sided region 11c, and a second blank region 11d. In a winding direction of the electrode assembly 1, the first two-sided region 11b has a winding starting end closer to a winding center and a winding terminating end farther away from the winding center. The first blank region 11a is located at the innermost side of the electrode assembly 1, and the first blank region 11a is connected to the winding starting end of the first two-sided region 11b. The first single-sided region 11c is connected to the winding terminating end of the first two-sided region 11b, and the second blank region 11d is located at the outermost side of the electrode assembly 1, the second blank region 11d being connected to the first single-sided region 11c. The first blank region 11a and the second blank region 11d are parts uncoated with the positive electrode active material layer 112 of two opposite surfaces of the positive electrode current collector 111 in the first direction X. The first two-sided region 11b is a part coated with the positive electrode active material layer 112 of the two opposite surfaces of the positive electrode current collector 111 in the first direction X. The first single-sided region 11c is a part coated with the positive electrode active material layer 112 of one surface of the positive electrode current collector 111 in the first direction X. For example, the positive electrode active material layer 112 may be applied on the surface of the positive electrode current collector 111 facing the winding center. It should be noted that although the first blank region 11a, the second two-sided region 13c, the first single-sided region 11c, and the second blank region 11d of the positive electrode plate 11 are separated by dashed lines in the figure, there is actually no interface, and the positive electrode plate 11 may be continuous as a whole.

For the first two-sided region 11b and the first single-sided region 11c, referring to the example shown in FIG. 3, the first two-sided region 11b and the first single-sided region 11c both have first parts 114, second parts 115, and third parts 116. In the second direction Y, the first part 114 is connected to one end of the second part 115, and the third part 116 is connected to another end pf the second part 115. The first parts 114 are the parts of the first two-sided region 11b and the first single-sided region 11c both close to the bottom of the electrode assembly 1, and the third parts 116 are the parts of first two-sided region 11b and the first single-sided region 11c both close to the top of the electrode assembly 1. It should be noted that although the first parts 114, the second parts 115, and the third parts 116 of the first two-sided region 11b and the first single-sided region 11c are separated by dashed lines in the figure, there is actually no interface, and the first two-sided region 11b and the first single-sided region 11c may be continuous as a whole.

For the foregoing negative electrode plate 13, the negative electrode plate 13 may include a third blank region 13a, a second single-sided region 13b, and a second two-sided region 13c. In a winding direction of the electrode assembly 1, the second single-sided region 13b has a winding starting end closer to the winding center and a winding terminating end farther away from the winding center. The third blank region 13a is located at the innermost side of the electrode assembly 1, and the third blank region 13a is opposite at least part of the first blank region 11a of the positive electrode plate 11, the third blank region 13a being connected to the winding starting end of the second single-sided region 13b. The second tow-sided region 13c is located at the outermost side of the electrode assembly 1, and the second two-sided region 13c is opposite at least part of the second single-sided region 13b of the positive electrode plate 11, the second two-sided region 13c being connected to the winding terminating end of the second single-sided region 13b. The third blank region 13a is a part coated with the negative electrode active material layer 132 of two opposite surfaces of the negative electrode current collector 131 in the first direction X. The second single-sided region 13b is a part coated with the negative electrode active material layer 132 of one surface of the negative electrode current collector 131 in the first direction X. For example, the negative electrode active material layer 132 may be applied on the surface of the negative electrode current collector 131 away from the winding center. The second two-sided region 13c is the part coated with the negative electrode active material layer 132 of the two opposite surfaces of the negative electrode current collector 131 in the first direction X. It should be noted that although the third blank region 13a, the second single-sided region 13b, and the second two-sided region 13c of the negative electrode plate 13 are separated by dashed lines in the figure, there is actually no interface, and the negative electrode plate 13 may be continuous as a whole.

In this application, the first part 114 and/or the third part 116 of the positive electrode plate 11 is in full contact with the electrolyte of the electrochemical apparatus 01. Compared with the second part 115 of the positive electrode plate 11, the first part 114 and the third part 116 of the positive electrode plate 11 have smaller concentration polarization, that is, the lithium ions in the first part 114 and the third part 116 have faster deintercalation and migration rate, making a region of the negative electrode plate 13 facing to the first part 114 and the third part 116 have limited lithium intercalation, finally leading to lithium precipitation at this region of the negative electrode plate 13. Based on this, the non-active material layer may be applied on the first part 114 and/or the third part 116 of the positive electrode plate 11, so as to slow down the deintercalation rate of lithium ions of the positive electrode active material layer 112 of the first part 114 and/or the third part 116. Refer to FIG. 4 together with reference to the example shown in FIG. 3. The non-active material layer may include a first non-active material layer 1131, where the first non-active material layer 1131 is formed on the first part 114 and the third part 116 of the positive electrode plate 11. It can be understood that a coating position of the first non-active material layer is not limited to this. For example, the first non-active material layer 1131 may be formed on at least one of the first part 114 of the first single-sided region 11c, the third part 116 of the first single-sided region 11c, the first part 114 of the first two-sided region 11b, or the third part 116 of the first two-sided region 11b.

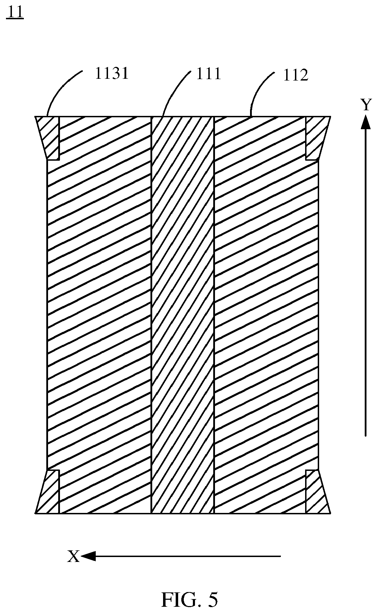

This is because regions from the first part 114 and/or the second part 115 of the positive electrode plate 11 to the third part 116 of the positive electrode plate 11 are all gradually in insufficient contact with the electrolyte of the electrochemical apparatus 01. In other words, the regions of the first part 114 or the second part 115 closer to the third part 116 of the positive electrode plate 11 have lower lithium precipitation. Refer to FIG. 5 together with reference to the example shown in FIG. 3. When the first part 114 and the third part 116 of the positive electrode plate 11 are both coated with the first non-active material layer 1131, in the second direction Y, the first non-active material layer 1131 formed on the first part 114 has an increasingly small cross sectional area. In addition, in the direction opposite the second direction Y, the first non-active material layer 1131 formed on the third part 116 also has an increasingly small cross sectional area. In this way, the lithium ions in all regions of the first part 114 and the third part 116 of the positive electrode plate 11 have roughly the same diffusion rate, so as to further improve the charge and discharge rate of the electrochemical apparatus 01. It can be understood that, toward the direction close to the third part 116, for the first non-active material layer 1131 formed on the first part 114 and the first non-active material layer 1131 formed on the third part 116, one has an increasingly small cross sectional area, and the other has an unchanged cross sectional area. Alternatively, for the first non-active material layer 1131 formed on the first part 114 and the first non-active material layer 1131 formed on the third part 116, both may have unchanged cross sectional areas. This is not limited in this application.

It should be noted that, in the electrochemical apparatus 01 disclosed in this application, in the second direction Y, a ratio of the distance between the two ends of the first non-active material layer 1131 to the distance between the two ends of the positive electrode current collector 111 is 0.01% to 30%, that is, a ratio of width of the first non-active material layer 1131 to width of the positive electrode current collector 111 is 0.01% to 30%. When the ratio is less than 0,01%, the first non-active material layer 1131 has an undesirably small coverage area, which is not conducive to slowing down the deintercalation rate of the lithium ions in the positive electrode active material layers 112 of the first part 114 and the second part 115. When the ratio is greater than 30%, the first non-active material layer 1131 has an undesirably large coverage area, impacting the deintercalation rate of the lithium ions in the first non-active material layer 1131 of the entire positive electrode plate 11, which is not conducive to improving the charge and discharge rate of the electrochemical apparatus 01.

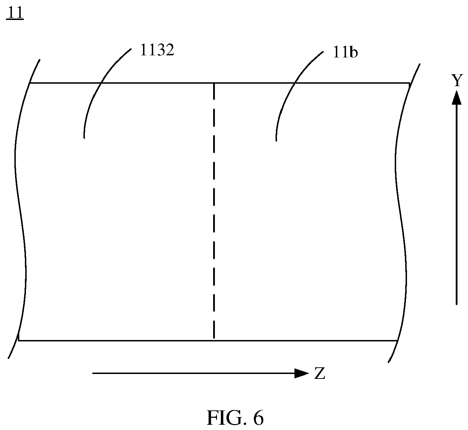

In some embodiments, when the positive electrode plate 11 undergoes a rollin process, surface tension of the slurry containing the positive electrode active materials drives the slurry to migrate toward the first blank region 11a, the first single-sided region 11c, and the second blank region 11d of the positive electrode plate 11, followed by drying to form a thick side. Thick sides may build a stress concentration point inside the electrochemical apparatus 01, making lithium precipitation more possible to occur at this point. Based on this, the non-active material layer may be applied again on the surface of the positive electrode plate 11 that has been coated with the positive electrode active material layer 112 to slow down the deintercalation rate of the lithium ions at the thick side. With reference to the examples shown in FIG. 6 to FIG. 8, the non-active material layer further includes a second non-active material layer 1132. The second non-active material layer 1132 may be formed on at least one of the winding starting end of the first two-sided region 11b, the winding terminating end of the first two-sided region 11b, or one end of the first single-sided region 11c farther away from the first two-sided region 11b. Furthermore, in the third direction Z, the second non-active material layer 1132 has a width of 1 µm to 30 µm.

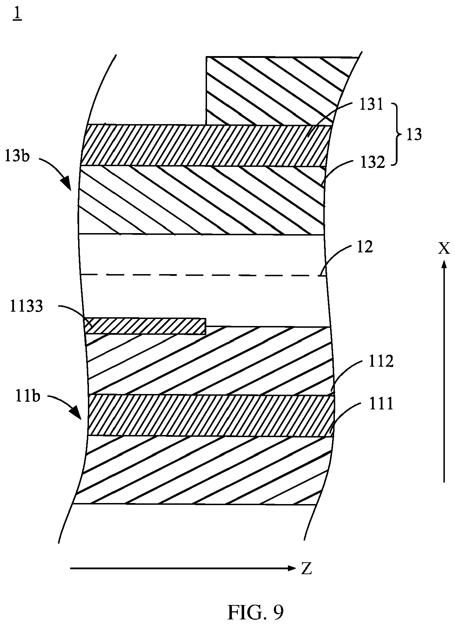

Referring to the example shown in FIG. 9, the negative electrode tab is connected to the third blank region 13a of the negative electrode plate 13. The third blank region 13a being connected to the second single-sided region 13b, that is, the second single-sided region 13b is close to the tab, may lead to high density of a current flowing through the second single-sided region 13b and high polarization of the second single-sided region 13b, thereby causing the second single-sided region 13b to be more likely to have lithium precipitation. Therefore, the non-active material layer may be applied on the surface of the positive electrode plate 11 facing the second single-sided region 13b, so as to decrease the polarization of the second single-sided region 13b. Specifically, the non-active material layer further includes a third non-active material layer 1133. The third non-active material layer 1133 is formed on the first two-sided region 11b of the positive electrode plate 11 facing to the second single-sided region 13b of the negative electrode plate 13.

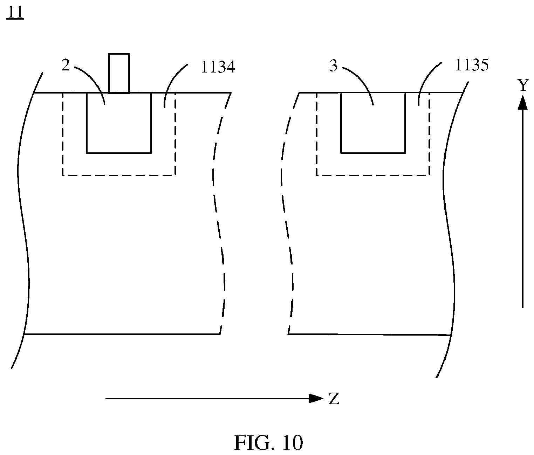

Referring to the example shown in FIG. 10, the positive electrode plate 11 is provided with a first groove (not shown in figure), and the positive electrode current collector 111 is exposed at the bottom of the first groove. An end of the positive electrode tab is accommodated in the first groove and is connected to the positive electrode current collector 111. The electrochemical apparatus further includes a first bonding piece 2. The first bonding piece 2 is fastened to the positive electrode plate 11 and covers the first groove. The non-active material layer includes a fourth non-active material layer 1134, where the fourth non-active material layer 1134 is disposed around a periphery of the first bonding piece 2. During the charge and discharge of the electrochemical apparatus, the positive electrode tab has high current density, leading to high concentration polarization of electrolyte at this part. In addition, because the first bonding piece 2 cannot block the diffusion path of the active lithium covering inside the first bonding piece 2, and the part facing to the positive electrode tab is also a groove, which means that there is no sufficient space for the active lithium in the positive electrode active material layer 112 to intercalate, and then lithium precipitation occurs. Therefore, the fourth non-active material layer 1134 may be applied on the periphery of the first bonding piece 2. During the same time, with the diffusion rate of the active lithium in the positive electrode active material layer 112 facing to the fourth non-active material layer 1134 being slowed down, the total amount of the active lithium in the negative electrode active material layer facing to the positive electrode tab is reduced, so as to alleviate lithium precipitation at the positive electrode tab. For example, the first bonding piece 2 includes but is not limited to an insulation tape.

Furthermore, the positive electrode plate 11 is further provided with a second groove (not shown in figure) facing to the negative electrode tab, and the negative electrode current collector 131 is exposed at the bottom of the second groove. The electrochemical apparatus further includes a second bonding piece 3. The second bonding piece 3 is fastened to the positive electrode plate 11 and covers the second groove. The non-active material layer further includes a fifth non-active material layer 1135, where the fifth non-active material layer 1135 is disposed around a periphery of the second bonding piece 3. Similarly to the foregoing reasons for lithium precipitation, the fifth non-active material layer 1135 may be applied on the periphery of the second bonding piece 3, so as to alleviate the lithium precipitation at the second groove. For example, the second bonding piece 3 includes but is not limited to an insulation tape.

In some embodiments, a stress concentration point is formed at the electrode plate bending place of the wound electrode assembly 1, making lithium precipitation be more likely to occur at the electrode plate bending place. Therefore, the non-active material layer may be applied on the electrode plate bending place to slow down the deintercalation rate of the lithium ions at the electrode plate bending place. For example, the non-active material layer further includes a sixth non-active material layer (not shown in figure). The sixth non-active material layer is disposed on the first bending section 1b and/or second bending section 1d of the positive electrode plate 11, which means that the sixth non-active material layer is disposed on at least one of the first bending section 1b of the first two-sided region 11b, the second bending section 1d of the first two-sided region 11b, the first bending section 1b of the first single-sided region 11c, or the second bending section 1d of the first single-sided region 11c.

Some specific examples and comparative examples are listed below to better describe this application. Lithium-ion electrochemical apparatus are used as examples.

### Example 1

Preparation of positive electrode plate: Lithium cobaltate, a conductive agent, and a binder polyvinylidene fluoride (PVDF) were dissolved at a mass ratio of 97.2:1.5:1.3 in an N-methylpyrrolidone (NMP) solution, to obtain a positive electrode active material layer slurry. The slurry was screened with a 200-mesh screen to obtain a positive electrode active material layer slurry with a solid content of 70% to 75%. Aluminum foil was used as the positive electrode current collector. The positive electrode active material layer slurry was applied on the surface of the positive electrode current collector using a coater. The coating thickness was 90 µm, and the electrode plate was 70 mm wide and 1400 mm long. A binder polyvinylidene fluoride (PVDF) and conductive agent were dissolved in an N-methylpyrrolidone (NMP) solution at a ratio of 6:4, to obtain a non-active material layer slurry with a solid content of 5%. The non-active material layer was applied on the first part and the third part of the electrode plate with a coating width of 5 mm, a coating thickness of 1 µm, and a coating length equal to the length of the positive electrode active material layer. After drying at 120°C, cold pressing, and slitting, the positive electrode plate was obtained.

Preparation of negative electrode plate: Graphite, a conductive agent, and a binder sodium carboxymethyl cellulose were dissolved at a mass ratio of 97:1.5:1.5 in an N-methylpyrrolidone (NMP) solution, to obtain a negative electrode active material layer slurry. The slurry was screened with a 200-mesh screen to obtain a negative electrode active material layer slurry with a solid content of 40% to 45%. Copper foil was used as the second current collector, and the negative electrode active material layer slurry was applied on the second current collector. After drying at 80°C, cold pressing, and slitting, the negative electrode plate was obtained.

Preparation of separator: Polyethylene (PE) with a thickness of 8 µm was used as a separator substrate. Two surfaces of opposite sides of the substrate were each coated with a 2 µm alumina ceramic layer, and finally, the two sides coated with the ceramic layers were each coated with a binder polyvinylidene fluoride (PVDF), with a coating weight of 2.5 mg/cm², followed by drying.

Preparation of electrolyte: In an environment with a moisture content less than 10 ppm, lithium hexafluorophosphate and non-aqueous organic solvents (propylene carbonate (PC):ethylene carbonate (EC):dimethyl carbonate (DMC):ethyl methyl carbonate (EMC)=1:1:0.5:1 by weight) were used to prepare a base electrolyte, followed by adding LiPF₆ and stirring to uniformity, to obtain the electrolyte with a concentration of LiPF₆ being 1 mol/L.

Preparation of electrochemical apparatus: The positive electrode plate, separator, and negative electrode plate were stacked in sequence such that the separator was sandwiched between the positive electrode plate and the negative electrode plate for separation, and the stack was wound to obtain an electrode assembly. The electrode assembly was placed in an outer package aluminum-plastic film, and was dehydrated at a temperature of 80°C, then the above-mentioned electrolyte was injected and packaging was performed, followed by processes such as formation, degassing, and cutting to obtain a lithium-ion battery.

For other examples and comparative examples, parameters were changed based on steps in example 1. Specific changed parameters are described below.

In Comparative Example 1, the positive electrode plate was uncoated with the non-active material layer. In Comparative Examples and Examples 2 to 6, lithium precipitation windows at 12°C for the positive electrode plate were different and can be changed by adjusting thickness of the non-active material layer. In Comparative Examples and Examples 7 to 10, the lithium precipitation windows at 12°C for the positive electrode plate were different and can be changed by adjusting coating position of the non-active material layer.

Analysis on the thickness of the non-active material layer of the positive electrode plate will be made with reference to the experimental data.

Lithium precipitation window test: The electrochemical apparatus was first discharged to a fully discharged state, a specific temperature (for example, 12°C) was then set, and the electrochemical apparatus was conventionally charged (constant current+constant voltage) at different rates such as 1C, 1.1C, 1.2C, ..., based on designs, that is, charged to the cut-off voltage of the battery at specified rates, then constant-voltage charged to 0.025C to end charging, and then fully discharged at 0.5C. Such charge-discharge cycle was repeated for 10 times. Finally, the fully charged electrochemical apparatus was disassembled to check whether lithium precipitation occurred at the negative electrode plate. A maximum current without lithium precipitation (no white spots on the surface of the negative electrode plate) was defined as a maximum rate without lithium precipitation of the battery, that is, a lithium precipitation window.

### Energy density test:

Battery energy density: An electrochemical apparatus under test was left standing for 3 hours at 25°C, constant-current charged at 0.5C until the voltage reached the rated voltage, and then constant-voltage charged until a charge/discharge rate reached 0.025C. Then, the charging was ended, and the electrochemical apparatus under test was left standing for 5 minutes. Then the battery was discharged to 3.0 V at 0.2C, and the electrochemical apparatus under test was left standing for 5 minutes. Finally, a discharge capacity was used as an actual battery capacity C of the battery. The electrochemical apparatus was determined to obtain its length L, width W, and thickness T, and the voltage of the discharge plateau for the battery was U. Therefore, the energy density of the battery VED=C×U/(L×W×T), where the battery capacity was measured in mA h, the plateau voltage U was measured in V, and the length, width, and thickness (L, W, and T) were measured in cm.

**Table 1 shows various parameters and evaluation results in Examples 1 to 11 and Comparative Example 1.**

| | Positive electrode plate | | Battery cell performance | |
|---|---|---|---|---|
| | Coating position of non-active material layer | Thickness (µm) | Lithium precipitation window at 12°C | Energy density (Wh/L) |
| Comparative Example 1 | Not applicable | Not applicable | 1.5C | 770 |
| Comparative Example 2 | First part and third part | 25 | 1.3C | 691 |
| Example 1 | First part and third part | 1 | 1.8C | 770 |
| Example 2 | First part and third part | 2 | 2.2C | 767 |
| Example 3 | First part and third part | 4 | 2.2C | 763 |
| Example 4 | First part and third part | 10 | 2.0C | 748 |
| Example 5 | First part and third part | 15 | 1.8C | 730 |
| Example 6 | First part and third part | 20 | 1.6C | 713 |
| Example 7 | Winding starting end | 2 | 2.1C | 768 |
| Example 8 | First two-sided region facing to second single-sided region | 2 | 2.1C | 766 |
| Example 9 | Periphery of first opening | 2 | 2.1C | 770 |
| Example 10 | Periphery of bonding piece | 2 | 2.1C | 770 |

It can be learned from comparison between Example 1 and Comparative Example 1 that a non-active material layer with such thickness being formed facilitates improving the charge capacity of the electrochemical apparatus while the energy density of the electrochemical apparatus remains basically unchanged.

It can be learned from comparison between Examples 1 to 6 that with the thickness of the non-active material layer increasing, the charge capacity of the electrochemical apparatus increases first and then decreases, and the energy density of the electrochemical apparatus keeps decreasing.

It can be learned from comparison between Example 6, Comparative Example 2, and Comparative Example 1 that with the thickness of the non-active material layer continuously increasing, the charge capacity of the electrochemical apparatus is less than the charge capacity when the non-active material layer was not formed.

It can be learned from comparison between Comparative Example 1 and Examples 7/8/9/10 that the thickness of the non-active material layer being unchanged and the coating position of the non-active material layer being adjusted facilitates improving the charge capacity of the electrochemical apparatus while the energy density of the electrochemical apparatus remains+ basically unchanged.

The foregoing descriptions are merely embodiments of this application, but are not intended to limit the patent scope of this application. Any equivalent structural transformations or equivalent procedure transformations made by using the content of the specification and drawings, or applications directly or indirectly to other related technical fields are included in the patent protection scope of this application in the same way.

## Claims

1. An electrochemical apparatus, comprising an electrode assembly; wherein the electrode assembly comprises a positive electrode plate, a negative electrode plate, and a separator for separating the positive electrode plate and the negative electrode plate; the positive electrode plate comprises a positive electrode current collector, a positive electrode active material layer, and a non-active material layer; the positive electrode active material layer is formed on a surface of the positive electrode current collector; the non-active material layer is formed on a surface of the positive electrode active material layer away from the positive electrode current collector; in a first direction, the non-active material layer has a thickness of 1 µm to 20 µm, wherein the first direction is a thickness direction of the positive electrode current collector; and a diffusion rate of lithium ions in the non-active material layer is less than that in the positive active material layer.

2. The electrochemical apparatus according to claim 1, wherein the positive electrode plate comprises a first part, a second part and a third part; and in a second direction, the first part is connected to one end of the second part, and the third part is connected to another end of the second part, wherein the second direction is perpendicular to the first direction, the second direction being a width direction of the positive electrode current collector; and
the non-active material layer comprises a first non-active material layer, wherein the first non-active material layer is disposed on at least one of the first part or the third part.

3. The electrochemical apparatus according to claim 2, wherein along the second direction, a ratio of a width of the first non-active material layer on the first part or the third part to a width of the positive electrode current collector is 0.01% to 30%.

4. The electrochemical apparatus according to claim 2, wherein the positive electrode plate, the separator, and the negative electrode plate are sequentially stacked and wound to form the electrode assembly;
the positive electrode plate comprises a first blank region, a first two-sided region, a first single-sided region, and a second blank region; wherein along a winding direction, the first two-sided region has a winding starting end and a winding terminating end, the winding starting end being closer to a winding center than the winding terminating end, the first blank region is connected to the winding starting end, a first end of the first single-sided region is connected to the winding terminating end, and the second blank region is connected to a second end of the first single-sided region, the second end of the first single-sided region being opposite from the first end of the first single-sided region; and
the non-active material layer comprises a second non-active material layer, wherein the second non-active material layer is disposed on at least one of the winding starting end, the winding terminating end, or the second end of the first single-sided region.

5. The electrochemical apparatus according to claim 4, wherein in a third direction, the second non-active material layer has a length of 1 µm to 30 µm; the third direction, the second direction, and the first direction being perpendicular to each other.

6. The electrochemical apparatus according to claim 4, wherein the negative electrode plate has a second single-sided region; and
the non-active material layer comprises a third non-active material layer, wherein the third non-active material layer is disposed on the first two-sided region of the positive electrode plate facing to the second single-sided region.

7. The electrochemical apparatus according to claim 1, wherein the positive electrode plate is provided with a first groove, and the positive electrode current collector is exposed at the bottom of the first groove;
the electrochemical apparatus comprises a positive electrode tab and a first bonding piece, wherein a part of the positive electrode tab is accommodated in the first groove and connected to the positive electrode current collector, and the first bonding piece is fastened to the positive electrode plate and covers the first groove; and
the non-active material layer comprises a fourth non-active material layer, wherein the fourth non-active material layer is disposed around a periphery of the first bonding piece.

8. The electrochemical apparatus according to claim 1, wherein the electrochemical apparatus further comprises a negative electrode tab and a second bonding piece, a part of the negative electrode tab being connected to the negative electrode current collector;
the positive electrode plate is provided with a second groove facing to the negative electrode tab, wherein the positive electrode current collector is exposed at the bottom of the second groove, and the second bonding piece is fastened to the positive electrode current collector and covers the second groove; and
the non-active material layer comprises a fifth non-active material layer, wherein the fifth non-active material layer is disposed around a periphery of the second bonding piece.

9. The electrochemical apparatus according to claim 1, wherein the electrode assembly comprises a first straight section, a first bending section, a second straight section, and a second bending section sequentially connected in a winding direction; the first straight section being disposed opposite to the second straight section and the first bending section being disposed opposite to the second bending section; and
the non-active material layer further comprises a sixth non-active material layer, wherein the sixth non-active material layer is disposed on at least one of the first bending section or the second bending section.

10. An electronic apparatus, comprising the electrochemical apparatus according to any one of claims 1 to 9.
